Europäisches Patentamt

European Patent Office

Office européen des brevets

(11) Publication number: **0 125 364**
**B1**

(12) **EUROPEAN PATENT SPECIFICATION**

(45) Date of publication of patent specification: **04.02.87**

(21) Application number: **83305946.2**

(22) Date of filing: **30.09.83**

(51) Int. Cl.⁴: **B 01 D 21/02, B 01 D 21/24**

(54) **Waste water clarifier.**

(30) Priority: **12.05.83 US 494005**
**16.05.83 US 494641**

(43) Date of publication of application:
**21.11.84 Bulletin 84/47**

(45) Publication of the grant of the patent:
**04.02.87 Bulletin 87/06**

(84) Designated Contracting States:
**DE FR GB IT NL SE**

(56) References cited:
**GB-A-2 075 856**
**US-A-3 970 556**

(73) Proprietor: **Beard, Harold James**
**P.O. Box 3833 11328 Pennywood Avenue**
**Baton Rouge Louisiana 70821 (US)**

(72) Inventor: **Beard, Harold James**
**P.O. Box 3833 11328 Pennywood Avenue**
**Baton Rouge Louisiana 70821 (US)**

(74) Representative: **MacGregor, Gordon et al**
**ERIC POTTER & CLARKSON 14 Oxford Street**
**Nottingham, NG1 5BP (GB)**

Courier Press, Leamington Spa, England.

**Description**

This invention relates to a system for treating waste water and, more particularly, to an oil and grease skimmer employed in an oxidation ditch clarifier.

To remove impurities, such as sugars and other carbohydrates and proteins and other forms of nitrogen, as well as other types of pollutants from domestic sewage, industrial waste water or similar waste water streams, the use of an orbital or oxidation ditch system can be employed.

In its general usage, an orbital waste water treatment system includes an elongated tank having two sidewalls and at least one partition wall mounted vertically in the tank substantially parallel to the two sidewalls and spaced apart from the ends of the tank to form an endless, circuitous channel or oxidation ditch to contain a portion of the waste water stream. In a conventional oxidation ditch system, the waste water is constantly circuitously flowed in the ditch while at the same time aerated to provide oxygen for micro-organisms to decompose most of the pollutants. An example of such a system can be seen in U. S. Patent 3,846,292, wherein a portion of the waste water put in the ditch is removed after aeration and then transferred to a conventional clarifier where heavier solid particles are separated out. Because of high construction costs, a system employing the clarifier in the ditch was developed; an example of which is seen in U.S. Patent No. 4,303,516.

However, because of turbulence in the clarifier used as well as the cost of ditch and clarifier construction due to the use of settlement separation processes, even these systems were not as efficient as desired. This led to the development of improved clarifier designs as shown in US—A—4,362,625 and US—A—4,383,922. This invention relates to an improved process of treating waste water streams made possible by these improved clarifier designs.

It is an object of this invention to provide an efficient process for treating waste water streams at faster rates and less expensively than in the prior art.

US—A—4,362,625 discloses a process for clarifying a waste water stream comprising circuitously flowing the waste water stream in an oxidation ditch positioning an elongate clarifier in the ditch to decrease the cross-sectional area of the stream, the clarifier having its front section heading into the flow of the stream, diverting a portion of the stream through an inlet into the clarifier, causing said portion to flow at a rate and distance sufficient to separate said portion into a clarified phase and a sludge phase, removing the sludge phase from the clarifier through ports in the bottom of the clarifier and removing the clarified phase from the clarifier.

The present invention is characterised by controlling the amount of said portion diverted into the clarifier by varying the head differential between the level of the portion inside and the level of the waste water stream outside the clarifier.

Reference is now made to the accompanying drawings, wherein:

Figure 1 is a schematic top view of a preferred oxidation ditch-clarifier assembly utilizing the skimmer of this invention.

Figure 2 is a detailed view of a preferred embodiment of the skimmer of this invention.

Figure 3 is a cross-sectional view taken along lines I—I of Figure 1, illustrating a preferred embodiment of the skimmer.

Figure 4 is a cross-sectional view taken along lines II—II of Figure 1.

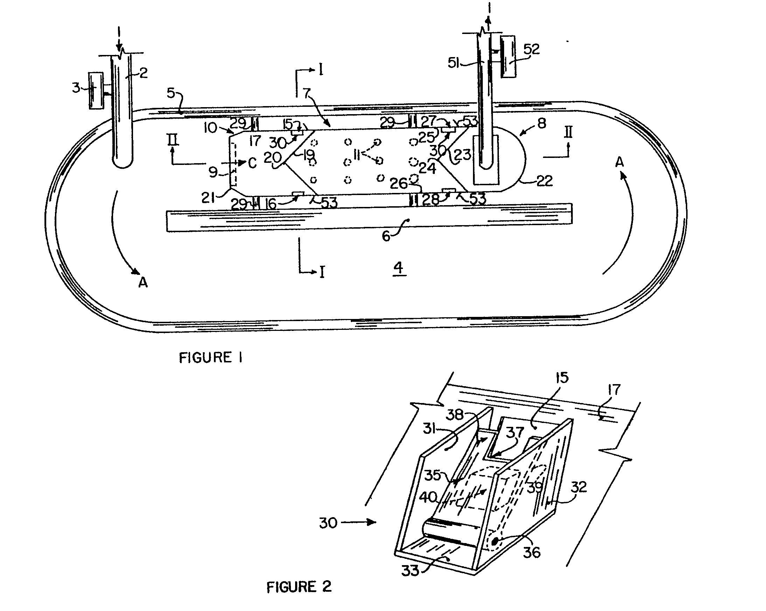

Referring now to Figure 1, waste water in stream 1 is removed through conduit 2 by pumping devices 3 and dumped into oxidation ditch 4 formed by concrete walls 5 and 6, as shown. The diverted portion of the waste water stream is circulated about ditch 4 in the direction of arrow A. If the velocity of the waste water entering ditch 4 is not sufficient to create the necessary waste water flow rate in ditch 4, various conventional means can be used to achieve the desired flow rate.

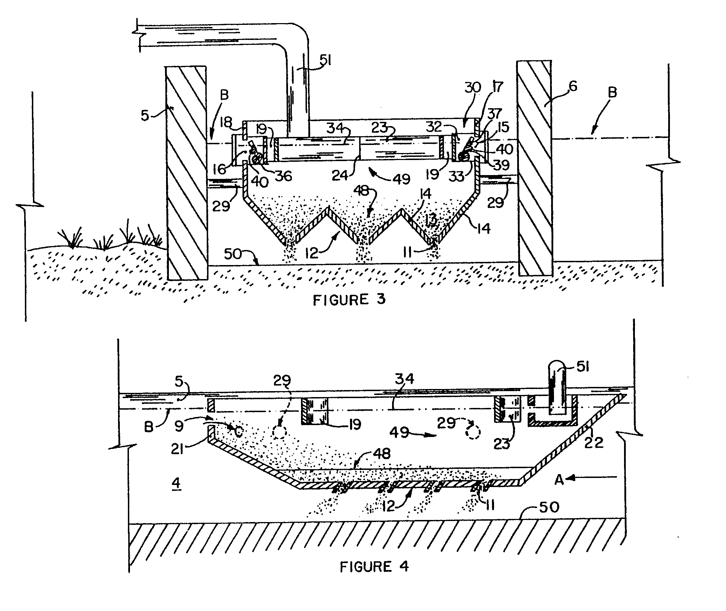

A clarifier 7, such as described in U.S. Patents Nos. 4,362,625 and 4,383,922, is positioned in ditch 4 whereby its front section 8 (front side sections and bow) faces into the direction of arrow A. Clarifier 7 is provided with an opening 9 located in the rear section 10 (rear side sections and stern), preferably the stern, and more preferably completely below the level B of the waste water in ditch 4. Clarifier 7 is also provided with a series of rows of ports 11 located in its bottom 12. As seen in Figure 3, a preferred embodiment of clarifier 7 is the utilization of parallel troughs 13 formed by sloping sidewalls 14 wherein ports 11 are positioned at the bottom of troughs 13.

To facilitate the removal of oils, greases and similar material which accumulate on the surface of the fluid in clarifier 7, rear side ports 15 and 16 are positioned in rear sidewalls 17 and 18, respectively, to allow the surface fluids to flow back into oxidation ditch 4. In a preferred embodiment, a "V" shaped rear baffle 19 extends between sidewalls 17 and 18 forward of ports 15 and 16 with its apex 20 facing stern 21. In this embodiment, baffle 19 extends above the fluid surface to a position below the surface to allow the deeper waste water to continue to flow toward the bow 22. Thus, the oils, greases, etc. are directed toward ports 15 and 16 and out of clarifier 7. In a more preferred embodiment, a front baffle 23 is provided having its apex 24 directed toward stern 21 and extending between bow sidewalls 25 and 26, as shown. Thus, oils, greases, etc., which do not rise to the surface until phase separation, as explained below, is almost complete, are directed toward bow side ports 27 and 28.

Clarifier 7 is rigidly attached to walls 5 and 6 by support members 29. To maintain a constant fluid flow rate out of clarifier 7 during changes in fluid level in ditch 4 and clarifier 7, skimmer assemblies 30 are positioned before each side port. Figures 2 and 3 illustrate one preferred embodiment of a skimmer assembly which can be used. In this embodiment, assembly 30 comprises parallel side plates 31 and 32 connected together at their lower end by floor plate 33 wherein side plates 31 and 32 extend above and below side port 15 and clarifier fluid level 34. Extending between side plates 31 and 32 is gate 35, which is pivotaly attached by pin 36. Gate 35 is provided with a slot 37 formed by cutting a wide notch in gate upper end 38. Attached to the back side 39 of gate 35 is a flotation device 40 positioned below fluid level 34 and having sufficient buoyancy force to maintain gate end 38 the same distance above fluid level 34 even when level 34 is changing. It is preferred that there be as little leakage between side walls 31 and gate 35 as possible, yet allow gate 35 to freely pivot on pin 36. Thus, the rate of fluid flowing through port 15 remains relatively constant even with changes in fluid levels.

The movement of the waste water through opening 9 will cause the direction of flow C in clarifier 7 to be directed back toward arrow A. It has been found that this change in flow direction results in less turbulence in clarifier 7, and, thus, enabling a quicker separation of the waste water into a sludge phase 48 and a clarified phase 49.

While this process could be carried out in batch fashion by closing opening 9 after the desired amount of waste water has entered clarifier 7, it is preferred to operate the process in a continuous fashion. This is accomplished by waste water between bottom 12 and ditch floor 50 flowing at a faster rate than the flow rate in other portions of ditch 4. This faster rate creates a head differential between the liquids in the clarifier and in the ditch which results in drawing the waste water, particularly the sludge phase, out of clarifier 7 through ports 11. The flow rate through ports 11 is preferably controlled by varying the total cross-sectional area of ports 11 through which fluids can pass or by varying the head differential between the level of the waste water in the clarifier and the level B of the waste water in the ditch. In a preferred embodiment, the head differential is preferably controlled by raising or lowering clarifier 7 in ditch 4 in order to vary the cross-sectional area ratio of the waste water stream at clarifier 7 to a position in front of clarifier 7. The increased displacement of clarifier 7 in the ditch results in a greater flow rate past ports 11 and increases the flow rate of the sludge phase through ports 11.

As the waste water flows through opening 9 into clarifier 7, its velocity begins to decrease allowing heavier particles to drift toward bottom 12. This results in a liquid or sludge phase containing a higher percentage of the undesired particles located near the clarifier bottom, which are then drawn out through ports 11. It has been found that a preferred maximum flow rate inside clarifier 7 is up to 3 cm/s (0.1 ft/sec) which, with proper sizing and positioning of ports 11, can achieve the preferred volume amounts ratio of sludge phase to clarified phase removed of 1:1 to 2:1. The lighter particles (oils, greases, etc.) float to the surface of the fluid and are directed toward the ports 15 or 16 by the action of the flow stream against the baffles directing these floating particles. All of this has been accomplished by the natural dynamics of the clarifier design without the use of motorized scrappers and other devices that must move across the surface of the clarifier. Even the preferred embodiment of the skimmer does not require any power driven equipment or other devices that create extra turbulence in the clarifier fluids.

As a final step, the clarified phase 49 is removed through conduit 51 by conventional pumping, gravity or syphon means 52 and returned to stream 1.

In another preferred embodiment, stream deflector plates 53 are angularly attached to the outside surface of sidewalls 17 and 18 to direct the flow of the waste water around the side ports 15 and 16 to restrict flow of the waste water into the clarifier from these ports.

In addition, gate 35, being floatable, will rise during turbulence in the oxidation ditch 4 to restrict flow back into the clarifier 7, thus preventing contamination of the clarified phase.

## Claims

1. A process for clarifying a waste water stream comprising circuitously flowing the waste water stream in an oxidation ditch (4) positioning an elongate clarifier (7) in the ditch to decrease the cross-sectional rea of the stream, the clarifier having its front section (8) heading into the flow of the stream, diverting a portion of the stream through an inlet into the clarifier, causing said portion to flow at a rate and distance sufficient to separate said portion into a clarified phase and a sludge phase, removing the sludge phase from the clarifier through ports in the bottom of the clarifier and removing the clarified phase from the clarifier characterised by controlling the amount of said portion diverted into the clarifier by varying the head differential between the level of the portion inside and the level of the waste water stream outside the clarifier.

2. A process according to Claim 1, wherein said portion is diverted into the clarifier in a countercurrent direction to the flow of the waste water stream in oxidation ditch.

3. A process according to Claim 2 wherein the clarifier has a bow portion which is faced into the waste water stream and a stern portion provided with the said inlet for receiving said portion.

4. A process according to Claim 1, 2 or 3 wherein the sludge phase and the clarified phase are continuously being removed from the clarifier in volume amounts equal to the volume of the portion being continuously diverted into the clarifier to maintain a constant amount of waste water in the clarifier.

5. A process according to any preceding claim wherein the maximum flow rate of said portion into the clarifier is up to 3 cm/s (0.1 ft/sec).

6. A process according to any preceding claim wherein the volume amounts ratio of sludge phase to clarified phase removed is 1:1 to 2:1.

**Patentansprüche**

1. Verfahren zum Klären eines Abwasserstromes, bei welchem der Abwasserstrom im Kreislauf durch einen Oxidationskanal (4) geführt ist, welcher ein langgestrecktes Klärbekken (7) umfaßt, um die Querschnittsfläche des Stromes zu verringern, wobei das Klärbecken mit seinem Vorderabschnitt (8) voran im Strom liegt und ein Teil des Stromes durch einen Einlaß in das Klärbecken abgezweigt wird, und dieser Teil mit einer solchen Fließgeschwindigkeit und über eine solche Länge geführt ist, die ausreichen, die geklärte Phase und die Schlammphase voneinander zu trennen, wobei die Schlammphase durch Auslässe am Boden des Klärbeckens abgeführt und die geklärte Phase aus dem Klärbecken entfernt wird, dadurch gekennzeichnet, daß die in das Klärbecken abgezweigte Abwassermenge durch Veränderung des Gefälles zwischen dem Pegel der im Klärbecken befindlichen Abwassermenge und dem Pegel des außerhalb des Klärbekkens befindlichen Abwasserstromes gesteuert wird.

2. Verfahren nach Anspruch 1, dadurch gekennzeichnet, daß die in das Klärbecken abgezweigte Abwassermenge entgegengesetzt zum Abwasserstrom im Oxidationskanal fließt.

3. Verfahren nach Anspruch 2, dadurch gekennzeichnet, daß das Klärbecken einen in den Abwasserstrom gerichteten Bugabschnitt und einen Heckabschnitt aufweist, welcher den Einlaß für das Abwasser aufweist.

4. Verfahren nach Anspruch 1, 2 oder 3, dadurch gekennzeichnet, daß die Schlammphase und die geklärte Phase kontinuierlich in einer Menge aus dem Klärbecken abgeführt wird, welche der dem Klärbecken kontinuierlich zulaufenden Menge übereinstimmt, um eine konstante Abwassermenge im Klärbecken aufrechtzuerhalten.

5. Verfahren nach einem der vorangehenden Ansprüche, dadurch gekennzeichnet, daß die maximale Fließgeschwindigkeit der in das Klärbecken abgezweigten Abwassermenge etwa 3 cm/s (0,1 ft/s) beträgt.

6. Verfahren nach einem der vorangehenden Ansprüche, dadurch gekennzeichnet, daß das Mengenverhältnis der Schlammphase und der abzuführenden geklärten Phase zwischen 1:1 und 2:1 beträgt.

**Revendications**

1. Procédé de clarification des eaux d'égout, qui consiste à faire circuler en circuit fermé le courant d'eaux usées dans un bassin d'oxydation ((4), à placer un épurateur (7) de forme allongée dans ce bassin, cet épurateur ayant sa partie avant (8) orientée à contrecourant, à détourner une partie du courant à travers une entrée qui la fait pénétrer dans l'épurateur, à faire circuler cette partie du courant avec un débit et sur une distance suffisants pour séparer cette partie en deux phases, à savoir une phase épurée et une phase boueuse, à extraire la phase boueuse de l'épurateur à travers des lumières situées dans le fond de l'épurateur et à extraire la phase épurée de l'épurateur, ce procédé étant caractérisé par le fait qu l'on contrôle la fraction de la partie détournée vers l'épurateur en faisant varier la hauteur d'eau différentielle qui existe entre le niveau de la partie interne et le niveau du courant d'eaux usées à l'extérieur de l'épurateur.

2. Procédé selon la revendication 1, dans lequel ladite fraction est détournée vers l'intérieur de l'épurateur à contre-courant de l'écoulement du courant d'eaux usées dans le bassin d'oxydation.

3. Procédé selon la revendication 2, dans lequel l'épurateur présente une partie de proue qui fait face au courant d'eaux usées et une partie de poupe qui comporte ladite entrée (9), destinée à recevoir ladite fraction.

4. Procédé selon l'une quelconque des revendications 1 à 3, dans lequel la phase boueuse et la phase épurée sont extraites de façon continue et cela en quantités volumétriques égales au volume de la partie qui est détournée de façon continue vers l'intérieur de l'épurateur afin de maintenir une quantité constante d'eaux usées dans l'épurateur.

5. Procédé selon l'une quelconque des revendications 1 à 4, dans lequel le débit maximal de circulation de ladite fraction dans l'épurateur est de 3 cm/seconde.

6. Procédé selon l'une quelconque des revendications 1 à 5, dans lequel le rapport volumétrique entre la phase boueuse et la phase épurée extraite est compris entre 1:1 et 2:1.

FIGURE I

FIGURE 2

FIGURE 3

FIGURE 4